Europäisches Patentamt

European Patent Office

Office européen des brevets

(19)

(11) Publication number: **0 401 443**
**A1**

(12) # EUROPEAN PATENT APPLICATION

(21) Application number: **89306643.1**

(22) Date of filing: **29.06.89**

(51) Int. Cl.5: **F16K 5/06, F16K 5/20**

(30) Priority: **16.05.89 US 352854**

(43) Date of publication of application:
**12.12.90 Bulletin 90/50**

(84) Designated Contracting States:
**AT BE CH DE ES FR GB GR IT LI LU NL SE**

(71) Applicant: **TACO, INC.**
**1160 Cranston Street**
**Cranston Rhode Island 02920(US)**

(72) Inventor: **Okerblom, Charles L.**
**C/O 1160 Cranston Street**
**Cranston Rhode Island 02920(US)**
Inventor: **Blackburn, George T.**
**C/O 1160 Cranston Street**
**Cranston Rhode Island 02920(US)**

(74) Representative: **Ben-Nathan, Laurence Albert**
**et al**
**Urquhart-Dykes & Lord 91 Wimpole Street**
**London W1M 8AH(GB)**

(54) **Low torque ball valve.**

(57) An improved low torque ball valve (10) has a pair of oppositely arranged thin washer like metal seats (44,46) in a "floating" arrangement. Each metal seat is free to flex over 40% to 70% of its radial dimension with sealing contact occurring at an inner edge thereof. Both the metal seat and the valve member are characterized by a low coefficient of friction and high hardness with the valve member having a surface of a microhardness of at least 500 on a conventional Vickers (DPH) scale. The metal valve seat has a hardness of at least RC 30. A journalled ball valve design includes a metal seat in the form of a thin flat washer and associated gasket (48) on only one side of the ball valve and is yet capable of efficient flow control in either direction therethrough. A conventional ball (36) with a central through bore (38) is employed but in an alternative low flow embodiment, the ball includes an external V-shaped fluid passageway for precise flow control in either on/off or modulating operation.

FIG. 1

# LOW TORQUE BALL VALVE

## BACKGROUND OF THE INVENTION

Ball valves have been in use for many years and a wide variety of designs have evolved with regard to the valve member, seating or sealing arrangements, and actuator configurations. In recent years plastic seats or seals such as Teflon have gained wide acceptance because of low torque demand in opening and closing operation. Such torque requirements, though relatively low, are still much greater than would be economically practical for use in residential hot water zone heating. Valves with Teflon seats are, however, now widely used in higher cost commercial and industrial applications.

Certain other disadvantages have also surfaced with regard to plastic seats. For example, Teflon has no memory. Hence, it will cold flow when yield strength is exceeded (normal in most assemblies). A valve so loaded and subject to further load in service due to unbalanced forces will cold flow still further, resulting in leakage when the high unbalanced force is removed and a lesser unbalanced force applied. Still further, because of a high coefficient of thermal expansion and a rapid loss of yield strength with temperature rise. The "cold flow" leakage problem is compounded at elevated temperature.

It is the general object of the present invention to provide an improved low torque ball valve wherein a judicious compromise is achieved in the selection of seat or sealing materials and the specific design thereof in combination with a specific ball design and surface characteristic and results in a ball valve operable at extremely low torque and with significant advantages over prior art ball valves with Teflon and other seat designs.

## SUMMARY OF THE INVENTION

In fulfillment of the foregoing object, a low torque ball valve is provided and comprises a valve body which defines inlet and outlet fluid flow passageways and a valve chamber disposed therebetween and in fluid flow communication therewith. A spherical valve member or ball is disposed in the valve chamber and has a fluid flow passageway therethrough. The valve member is provided with a surface having a low coefficient of friction and a microhardness of at least 500 on a conventional Vickers (DPH) scale. The valve member is moveable at least between open and closed positions in the chamber whereby respectively to accommodate fluid flow through the inlet passageway, the valve member passageway, and thence through the outlet passageway, and positively to prevent such fluid flow. At least one annular metal valve seat is provided in the form of a thin substantially flat washer-like member and the seat is characterized by a hardness of at least RC 30 and a very low coefficient of friction. The valve seat is disposed in the valve chamber with a major dimension thereof extending at least approximately in a transverse direction relative to at least one of the inlet and outlet passageways. An annular gasket is arranged in sealing relationship between an outer portion of the valve seat and the valve body and an inner portion of the valve seat is in sealing contact with the spherical valve member. The valve seat is maintained in a slightly flexed condition by a preload force exerted between the valve seat and the valve member. Between 40% and 70% of the transverse dimension of the valve seat is free to flex under such preload force and or pressure of fluid in the passageways.

In one embodiment, inlet and outlet passageways are arranged on a common centerline and a spherical valve member is of the floating type with similar but oppositely arranged valve seats and associated gaskets disposed respectively on the inlet and outlet sides thereof. Each valve seat is slightly flexed under preload forces exerted between the seats and the valve member. An actuator for rotating the valve member has a loose connection therewith in at least one direction to permit free centering of the valve member at the urging of and under the control of said opposite valve seats.

In another embodiment of the ball valve of the present invention, the valve member is provided on opposite sides respectively with an actuator and a trunnion for rotation under the urging of the former and relative to the latter between said open and closed positions. In this embodiment a single valve seat is provided with an associated gasket on one side of the valve chamber and valve member. The valve seat may be on either side of the valve member but is preferably provided on the outlet side of the valve chamber and valve member as shown.

In a low flow design of the ball valve, the fluid flow passageway through the spherical valve member is at least generally V-shaped in cross section and opens outwardly through the peripheral surface of the member with opposite end portions of the passageway tapering toward and terminating at the peripheral surface of the member.

With the aforementioned embodiments, and in a one half inch ball valve design, actuating torque levels as low as ten inch ounces have been achieved at pressure differentials as high as 150 PSI.

BRIEF DESCRIPTION OF THE DRAWINGS

Fig. 1 is a cross sectional view through a ball valve of the "floating" type with metal seats on opposites sides of the ball member and a "loosely" connected actuator for self centering of the ball, the flexing of the metal seats being exaggerated for clarity of illustration.

Fig. 2 is an exploded perspective view of the ball valve of Fig. 1.

Fig. 3 is an enlarged exploded sectional view showing a portion of a ball member, a metal seat therefore, a gasket associated with the metal seat, and valve body parts.

Fig. 4 is another embodiment of a ball valve of the floating type with valve seats on opposite sides of the spherical member in the valve chamber and with retaining members for the seats and associated gaskets held in position by associated snap rings.

Fig. 5 is a ball valve of the "journalled" type with a trunnion and an actuator on opposite sides of a ball member and with a metal seat and an associated gasket on one side only of the spherical valve member.

Fig. 6 is a perspective view of a further embodiment of a spherical valve member having an external fluid flow passageway which opens through a peripheral surface thereof, the ball member being shown in a closed position relative to an associated metal seat.

Fig. 7 is a perspective view of the ball member of Fig. 6 shown in an open position relative to metal seats on opposite sides thereof.

DESCRIPTION OF THE PREFERRED EMBODIMENTS

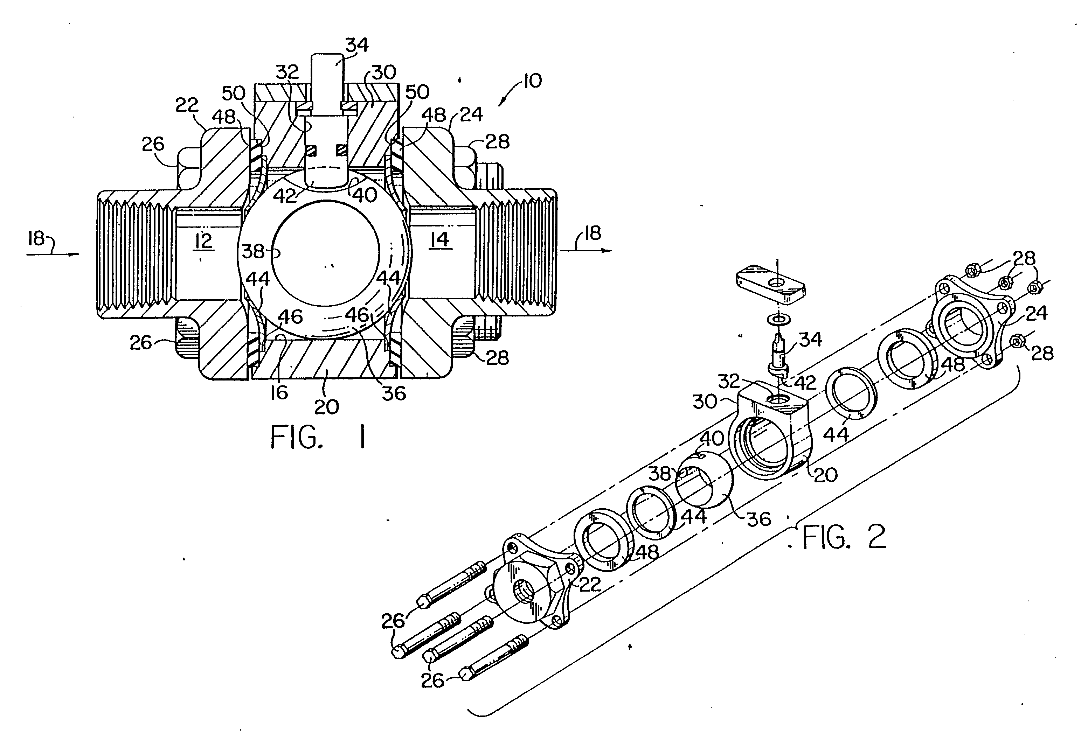

Referring particularly to Fig. 1, an improved low torque ball valve is indicated generally at 10 and comprises a valve body which defines inlet and outlet fluid flow passageways 12, 14 and a valve chamber 16 disposed therebetween and in fluid flow communicarion therewith. Arrows 18, 18 indicate the direction of fluid flow although it should be noted that fluid flow can be controlled in either direction with the valve design of Fig. 1.

The valve body includes a central annular member 20 with similar and oppositely arranged end portions 22, 24. The end portions 22, 24 respectively define the inlet and outlet passageways 12 and 14 and are each threaded internally for ready connection with associated conduits in the embodiment shown. Many other end connections are of course possible. Diametrically enlarged flanges on the annular members 22, 24, best illustrated in Fig. 2, are adapted for bolt-nut interconnection for assembly of the valve body. More specifically, four bolts 26, 26 are provided for cooperation with four nuts 28, 28 in assembling the valve body.

A boss 30 on the annular member 20 is provided with a bore 32 for receiving an actuator 34 for a spherical valve member 36 disposed in the valve chamber 16. The spherical or ball-shaped valve member 36 is provided with a passageway 38 therethrough and is adapted to be moved at least between open and closed positions in the valve chambers 16. That is, the ball or valve member 36 may be moved from the closed position shown in Fig. 1 through 90° to an open position so that the passageway 38 therethrough will communicate with the inlet and outlet passageways 12, 14 whereby to accommodate fluid flow through the inlet passageway, the passageway 38 in the valve member, and thence through the outlet passageway 14. As shown and as presently preferred, the passageways 12, 14 and 38 are cylindrical and arranged on a common centerline and are of like diameter to provide for unimpeded linear flow through the passageways with the valve member 36 in the open position.

Movement of the valve member 36 between its open and closed positions in the chamber 16 may be accomplished by the actuator 34 by manual manipulation or at the urging of and under the control of various power driven operators including electric motors, pneumatic operators etc. As shown, a loose connection is provided for between the actuator 34 and the valve member 36 in at least one direction to provide for the free centering of the valve member in a manner to be more fully disclosed hereinbelow. A partially circular slot 40 in the valve member 36 receives an end portion 42 of the actuator and provides a loose connection for movement of the valve member 36 leftwardly and rightwardly or toward and away from the inlet and outlet passageways 12, 14 respectively in Fig. 1. It should also be noted that a loose fit is provided between the actuator portion 42 and the slot 40 in the perpendicular direction so as to provide for slight ball member movement relative thereto in the open position of the valve and in a direction along the centerline of passageways 12, 14 and 38.

In the Fig. 1 embodiment, annular metal valve seats 44, 44 are provided at opposite sides of the valve member of the ball 36 and are shown with outer portions thereof received in annular grooves 46, 46 in the central or intermediate body portion 20. Disposed adjacent outer portions of the metal valve seats are gaskets 48, 48 which are received in annular grooves 50, 50 also formed in the central portion 20 of the valve body. The gaskets 4S, 48 are clamped in position adjacent outer portions of the valve seats 44, 44 by the outer valve body portions 22, 24 such that leakage is positively prevented around the outer diametrical edges of the valve seats 44, 44.

Each valve seat 44 preferably takes the form of a thin substantially flat washer-like member with a major dimension which extends at least approximately in a transverse direction relative to at least one of the inlet and outlet passageways 12, 14. As shown in Fig. 1 the seats 44, 44 are arranged transversely but the exaggerated flexing thereof for clarity of illustration may appear to cause the seats to depart from such an arrangement. An inner portion of each valve seat is in sealing contact with the ball or spherical valve member 36 and in a slightly flexed condition under preload forces between the valve seats. Between 40% and 70% of the transverse dimension of the valve seat is free to flex under preload forces and or the pressure of fluid in the passageways in accordance with the present invention. Further, the flexing of the valve seat is believed to be optimum in a range between 5 and 10 thousandths of an inch. Stated differently, each valve seat is flexed sufficiently to provide positive shut-off at a fluid pressure in the 2 to 5 PSI range. These design considerations cooperate with seat and valve member characteristics to be set forth hereinbelow in providing highly efficient and low torque valve operation.

As mentioned above, low coefficient of friction and high hardness characteristics are important features of the present invention particularly with regard to the metal valve seat and spherical valve member surfaces. Preferably, and in accordance with the present invention, the valve member 36 has a surface with a very low coefficient of friction and a microhardness of at least 500 on a conventional Vickers (DPH) scale. More particularly, the valve member is preferably provided with a surface microhardness of at least 1000 on the Vickers scale. The material of the valve member is preferably a mild steel substrate with a hardened electroless nickel plate thereover. Alternatively, a hard chrome plate or a stainless steel surface hardened by nitrating or other means may be employed. Approximately a 300 series stainless steel is preferred. Solid stellite or tungsten carbide as well as many powder metal composites are also contemplated for use as a surface of the spherical valve member.

The metal valve seats 44, 44 should have a hardness at least equal to RC 30 and preferably at least equal to or in excess of RC 55. The material of the valve seat is preferably a work hardened stainless steel or other corrosion resistant material with mechanical properties equal to or better than stainless steel. A wrought stellite is a further example of an acceptable seat material.

As mentioned above, the combination of the foregoing design configuration characteristics and surface characteristics of the metal seats 44, 44 and the spherical valve member 36 result in a ball valve in a one-half inch diameter design having extremely low torque characteristics in the neighborhood of 10 inch ounces.

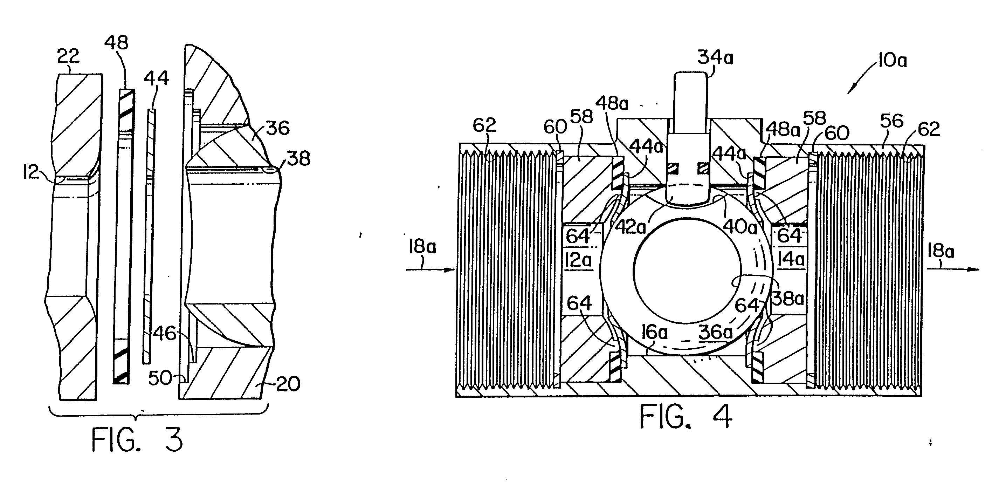

Referring now to Fig. 4, it will be observed that an alternative embodiment of the invention in a ball valve 10a has a unitary valve body 56 with left and righthand retainers 58, 58 therewithin for securing a ball or spherical valve member 36a, metal seats 44a, 44a and gaskets 48a, 48a in position. The retainers 58, 58 are annular in configuration and define passageways 12a and 14a respectively on inlet and outlet sides of the ball valve and valve chamber 16a. Snap rings 60, 60 respectively secure the retainers 58, 58 in assembled positions within the unitary body 56. As shown, the body 56 may be threaded internally as at 62, 62 at its opposite ends for ready connection with an associated conduit.

An actuator 34a which may be manually manipulated or power driven is or may be in all respects identical with the actuator 34. Similarly, with regard to connection of the actuator end portion 42a with the ball or spherical valve member 36a at a slot 40a. That is, a loose connection is provided in both the open and closed positions of the ball 36a for self centering of the ball relative to the metal seats 44a, 44a in a "floating" ball design.

The geometrical features of the metal seats 44a, 44a the gaskets 48a, 48a and the ball 36a are or may be identical with those set forth above for the ball valve of Fig. 1 except for a slight modification in the gasket seat design. That is, the gaskets 48a, 48a have a somewhat reduced dimension in the radial or diametrical direction and a small portion 64, 64 of each retainer 58 extends in an annular configuration and in an axial direction toward its associated metal seat 44a. Thus, metal to metal contact may occur between the small annular portion 64, 64 and the metal seats 44a, 44a. This is not found to affect performance with the retainers 58, 58 shaped radially inwardly of the portions 64, 64 to recede axially and thereby to provide the necessary free flexing operation of the metal seats 44a, 44a over 40% to 70% of their radial or transverse dimension as set forth above. The surface characteristics including hardness and low coefficient of friction mentioned above are also adhered to in the design and construction of the ball 36a and the metal seats 44a, 44a whereby to provide for low torque operation. That is, all features and limitations set forth above apply equally with regard to Fig. 4 embodiment.

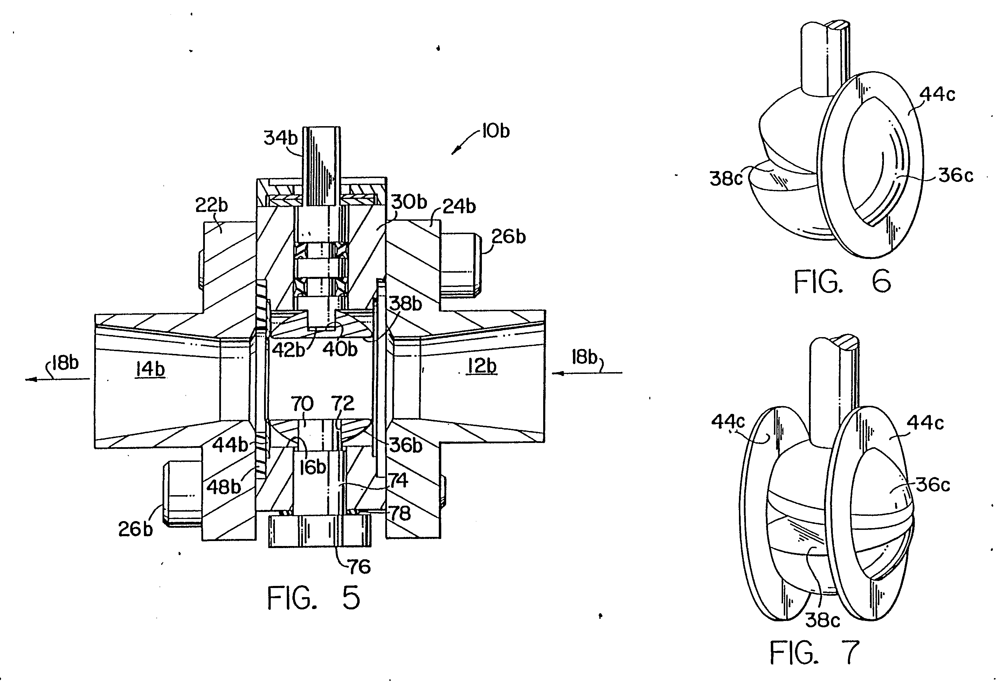

In Fig. 5 a further embodiment of the ball valve of the present invention is illustrated at 10b and includes a three piece body having opposite end portions 22b, 24b and a central or intermediate portion 30b. The flow of fluid in Fig. 5 is from right to left as indicated by the arrows 18b, 18b with the end section 24b defining an inlet passageway 12b and the end section 22b defining an outlet passageway 14b. A valve chamber 16b is defined between the inlet and outlet passageways and has disposed therewithin a ball or spherical valve member 36b with a fluid flow passageway 38b therethrough. The three body sections or portions 22b, 24b and 30b are held in assembled relationship by bolts 26b, 26b which are each threadably received in an opposite end section or portion so as to dispense with the necessity for complimentary nuts.

An actuator 34b may differ somewhat from the aforementioned actuators 34 and 34a. At a lower end portion thereof a projecting portion 42b is entered in a slot 40b in the ball or spherical member 36b and is tightly received therein with only the usual or normal tolerances encountered in valve construction. Member 42b is preferably of square cross section so as to provide a positive connection with the valve member for rotation of the latter between its open and closed positions, the valve member being illustrated in the open position in Fig. 5.

At a side of the valve body opposite the actuator 34b the valve member 36b has an associated trunnion with a cylindrical end portion 70 thereof entered in a bore 72 in the valve member. An intermediate portion 74 of the trunnion may be threadably or otherwise fixed in the valve body central portion 30b and a head portion 76 thereof may be sealed as at 78 for the prevention of fluid leakage from the valve chamber 16b. As will be apparent, the valve member 36b rotates relative to the trunnion end portion 70 and is journalled thereby for precise positioning under the urging and control of the actuator 34b.

Absent the "floating" arrangement of Figs. 1 and 4, a single metal valve seat 44b and associated gasket 48b are provided at the left hand portion of the ball or spherical valve member 36b in the valve chamber 16b. The construction end design of the valve seat and gasket as well as the surface characteristics of the valve seat may be substantially identical with those mentioned above for the Fig. 1 and Fig. 4 embodiments of the invention.

In Figs. 6 and 7 a low flow valve design has an external V-shaped fluid passageway 38c therein.

The central or intermediate portion of the fluid passageway 38c is of relatively large generally V-shaped cross sectional configuration with opposite end portions thereof tapering toward and terminating at the peripheral surface of the valve member 36c. Thus, a judicious design of the fluid passageway with an eye toward both the specific configuration and dimensional characteristics thereof results in precise control of flow either in and on-off or modulating operation with flow area being determined by the interrelationship of valve member position and the metal valve seats 44c, 44c.

From the foregoing, it will be apparent that a simple and yet highly efficient ball valve has been provided. The valve can be constructed at economic advantage and provides highly efficient operation with extremely low torque characteristics. That is, operating torque may be as low as ten inch pounds for a one-half inch ball valve with the specific valve design of the present invention. The ball valve is thus particularly well suited to use in a motorized zone control environment in hot water heating systems for residential and/or commercial installations as well as a wide variety of other applications involving either manual or power operation of the valve actuator. Various two-way valve designs may be provided as described above as well as three-way and other conventional designs.

## Claims

1. A low torque ball valve comprising a valve body defining inlet and outlet fluid flow passageways and a valve chamber disposed therebetween and in fluid flow communication therewith, a spherical valve member disposed in said valve chamber and having a fluid flow passageway therethrough, said valve member having a surface with low coefficient of friction and a microhardness of at least 500 on a conventional Vickers (DPH) scale, and said valve member being moveable at least between open and closed positions in said chamber respectively to accommodate fluid flow through said inlet passageway, through the valve member passageway, and thence through said outlet passageway, and positively to prevent such fluid flow, at least one annular metal valve seat having a hardness of at least RC30 and a low coefficient of friction disposed in said valve chamber and taking the form of a thin substantially flat washer-like member with a major dimension extending at least approximately in a transverse direction relative to at least one of said inlet and outlet passageways, and an annular gasket disposed in sealing relationship between an outer portion of said valve seat and said valve body, an inner portion of said valve seat being in sealing contact with said spherical valve member and in a slightly flexed condition under pre-load force between the valve seat and the valve member, and between forty and seventy per cent of the transverse dimension of the valve seat being free to flex under said pre-load force and the pressure of fluid in said passageways.

2. A low torque ball valve as set forth in claim 1 wherein said inlet and outlet passageways are arranged on a common centerline, and wherein the spherical valve member is of the floating type with similar but oppositely arranged valve seats and associated gaskets disposed respectively on inlet and outlet sides thereof, each said valve seat being slightly flexed under pre-load forces exerted between the seat and the valve member.

3. A low torque ball valve as set forth in claim 1 and including a valve member actuator for rotating the member between said open and closed positions, said actuator and valve member having a loose connection in at least one direction to permit free centering of the valve member at the urging and under the control of said opposite valve seats.

4. A low torque ball valve as set forth in claim 2 wherein said inlet, outlet and valve member passageways are of cylindrical configuration and of like diameter so as to accommodate unimpeded linear fluid flow therethrough when the valve member is in the open position.

5. A low torque ball valve as set forth in claim 1 wherein the valve member is provided on opposite sides respectively with an actuator and a trunnion for rotation under the urging of the former and relative to the latter between said open and closed positions, and wherein a single valve seat is provided with its associated gasket on one side of said valve chamber and member.

6. A low torque ball valve as set forth in claim 5 wherein said single valve seat is provided on the outlet side of said valve chamber and member.

7. A low torque ball valve as set forth in claim 5 wherein said inlet, outlet and valve member passageways are aligned and of cylindrical configuration and like diameter so as to accommodate unimpeded linear fluid flow therethrough when the valve member is in the open position.

8. A low torque ball valve as set forth in claim 1 wherein said fluid flow passageway through the spherical valve member is at least generally V-shaped in cross section and opens outwardly through the peripheral surface of the member with opposite end portions of the passageway tapering toward and terminating at the peripheral surface of the member.

9. A low torque ball valve as set forth in claim 1 wherein said valve seat has a hardness at least equal to RC55.

10. A low torque ball valve as set forth in claim 1 wherein said valve member has a surface micro-hardness of at least 1000.

11. A low torque ball valve as set forth in claim 1 wherein the material of said valve seat is work hardened stainless steel.

12. A low torque ball valve as set forth in claim 1 wherein said valve member has a mild steel substrate with a hardened electroless nickel plate thereover.

13. A low torque ball valve as set forth in claim 1 wherein said valve seat is flexed approximately five to ten thousandths of an inch.

14. A low torque ball valve as set forth in claim 1 wherein said valve seat is flexed sufficiently to provide positive shut-off at a fluid pressure in the two to five psi range.

FIG. 2

FIG. 1

FIG. 4

FIG. 3

FIG. 6

FIG. 7

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4147327 (MORAN)<br>* column 3, lines 1 - 19; figure 2 * | 1, 5, 14 | F16K5/06<br>·F16K5/20 |
| A | CH-A-469925 (GACHOT)<br>* column 2, lines 20 - 29; figure 1 * | 1-4, 11, 14 | |
| A | FR-A-2044118 (PERES)<br>* page 5, lines 28 - 34; figure * | 1, 4, 5 | |
| A | US-A-4004776 (STENDER)<br>* column 2, line 62 - column 3, line 3; figure 1 * | 1, 2, 4, 10, 12 | |

TECHNICAL FIELDS
SEARCHED (Int. Cl.5 )

F16K

The present search report has been drawn up for all claims

| Place of search | Date of completion of the search | Examiner |
|---|---|---|
| THE HAGUE | 02 OCTOBER 1990 | CHRISTENSEN J.T. |